Europäisches Patentamt

(19) European Patent Office

Office européen des brevets

(11) Numéro de publication: **0 204 613**
**B1**

(12) **FASCICULE DE BREVET EUROPEEN**

(45) Date de publication du fascicule du brevet: **05.09.90**

(51) Int. Cl.⁵: **G 01 S 13/38,** G 01 S 17/36, G 01 S 13/28, G 01 S 17/10

(21) Numéro de dépôt: **86401112.7**

(22) Date de dépôt: **27.05.86**

(54) Procédé et dispositif pour la mesure du temps de propagation d'une onde.

(30) Priorité: **29.05.85 FR 8508177**

(43) Date de publication de la demande:
**10.12.86 Bulletin 86/50**

(45) Mention de la délivrance du brevet:
**05.09.90 Bulletin 90/36**

(84) Etats contractants désignés:
**CH DE FR GB IT LI SE**

(56) Documents cités:
**US-A-3 263 227**
**US-A-3 752 582**
**US-A-4 443 799**

**HEWLETT PACKARD JOURNAL, vol. 31, no. 6, juin 1980, pages 3-11, Palo Alto, US; D.E. SMITH: "Electronic distance measurement for industrial and scientific applications"**

**HEWLETT PACKARD JOURNAL, vol. 31, no. 9, septembre 1980, pages 3-11, Palo Alto, US; A.F. GORT: "A fully integrated, microprocessor-controlled total station"**

(73) Titulaire: **SEXTANT Avionique**
**5/7 rue Jeanne Braconnier Parc Tertiaire**
**F-92368 Meudon la Forêt Cedex (FR)**

(72) Inventeur: **Torregrosa, Michel**
**25, rue Jules Védrines**
**F-26027 Valence Cédex Drôme (FR)**
Inventeur: **Margaillan, Eric**
**25, rue Jules Védrines**
**F-26027 Valence Cédex Drôme (FR)**

(74) Mandataire: **Bloch, Robert et al**
**2, square de l'Avenue du Bois**
**F-75116 Paris (FR)**

Courier Press, Leamington Spa, England.

EP 0 204 613 B1

**Description**

La présente invention a tout d'abord pour objet un procédé de mesure du temps de propagation $\tau_t$ d'une onde entre un émetteur récepteur de la dite onde, et un obstacle réflecteur, dans lequel:

—on émet ladite onde modulée en amplitude à l'aide d'un signal de modulation périodique,

—on détecte l'amplitude de ladite onde après propagation, réflexion et réception, pour obtenir un signal détecté,

—on engendre un signal de référence périodique de même période que ledit signal de modulation et déphasé par rapport à lui d'un déphasage correspondant à un temps de retard $\tau$,

—on calcule la fonction d'intercorrélation entre ledit signal détecté et ledit signal de référence,

—on commande ledit déphasage pour que ladite fonction d'intercorrélation soit nulle, et,

—on calcule ledit temps de propagation $\tau_t$ à partir du temps de retard $\tau$ ainsi obtenu.

Un tel procédé est utilisé en télémétrie, pour déterminer la distance entre l'émetteur-récepteur et l'obstacle réflecteur à partir du temps de propagation $\tau_t$ mesuré et de la vitesse de l'onde.

On connait déjà un procédé du type ci-dessus, décrit par exemple dans le brevet US 3 752 582. Dans ce brevet le signal de modulation est un signal sinusoïdal de pulsation $\omega$, et le signal de référence est constitué par le signal de modulation retardé du temps de retard $\tau$. Dans ce cas, lorsque $\tau$ correspond à l'annulation de la fonction d'intercorrélation entre le signal détecté et le signal de modulation retardé, il est facile de montrer que l'on a:

$$\tau_t = \tau - \pi/2\omega + 2k\,\pi/\omega$$

où k est un entier quelconque.

Pour s'affranchir de l'indétermination de $2k\,\pi/\omega$, on est amené à choisir une pulsation $\omega$ du signal émis tel que le terme

$$2\,\pi/\omega$$

soit supérieur au temps de propagation maximal $(\tau_t)_{max}$ à mesurer, soit:

$$2\,\pi/\omega > (\tau_t)_{max}$$

Le temps de propagation maximal $(\tau_t)_{max}$ à mesurer est naturellement lié à la distance maximale à mesurer $L_{max}$ par la relation:

$$(\tau_t)_{max} = 2\,L_{max}/v$$

où v est la vitesse de l'onde dans le milieu de propagation.

Dans ce cas, la précision de la mesure est assez faible, car il est difficile d'apprécier des déphasages très petits, surtout en présence du bruit qui affecte le signal détecté et car une erreur sur le déphasage conduit à une erreur sur la distance d'autant plus grande que la pulsation est faible.

Pour éviter l'inconvénient précédent, un procédé, décrit dans l'article de D. E. Smith "Electronic distance measurement for industrial and scientific applications" dans Hewlett Packard journal, vol. 31, No. 6, juin 1980 pages 3—11, Palo Alto, US, prévoit de lever l'ambiguité en procédant par estimations successives. Pour cela, on effectue successivement plusieurs mesures sur des signaux $S_0, S_1, \ldots, S_i, \ldots$ et $S_l$ de pulsations, $\omega_0, \omega_1, \ldots, \omega_i, \ldots$ et $\omega_l$ telles que les pulsations $\omega_1, \ldots, \omega_i, \ldots$ et $\omega_l$ soient croissantes et multiples de la pulsation $\omega_0$. Dans ces conditions, la dernière mesure, faite à la pulsation la plus élevée donne la meilleure résolution. Mais, ceci implique plusieurs mesures successives, ce qui prend du temps. De plus, si, entre deux mesures successives, la distance à mesurer varie trop vite, le résultant peut être erroné.

La présente invention vise à pallier les inconvénients précédents en procurant un procédé qui permet, en une seule mesure, d'obtenir sans ambiguité la valeur de la distance à mesurer, même si celle-ci est grande, avec une résolution égale à celle qu'on obtient dans les procédés de l'art antérieur avec un signal de pulsation élevée.

A cet effet, elle a pour objet un procédé du type défini ci-dessus, caractérisé par le fait que:

—chaque période dudit signal de modulation comprend une succession de signaux élémentaires d'amplitudes égales $S_0, S_1, \ldots, S_i, \ldots$ et $S_l$ de durées $T_0, T_1, \ldots, T_i, \ldots$ et $T_l$ respectivement, chaque signal élémentaires $S_i$ étant sensiblement périodique de pulsation moyenne $\omega_i$, les pulsations $\omega_1, \ldots, \omega_i, \ldots$ et $\omega_l$ étant elles que:

$$\omega_i = (2i+1)\,\omega_0$$

et les durées $T_0, T_1, \ldots, T_i, \ldots$ et $T_l$ étant inversement proportionnelles aux pulsations $\omega_0, \omega_1, \ldots, \omega_i, \ldots$ et $\omega_l$ respectivement,

—chaque période dudit signal de référence comprend une succession de signaux élémentaires $S'_0$, $S'_1, \ldots, S'_l, \ldots$ et $S'_l$, chaque signal $S'_i$ étant el que:

$$S'_i = (-1)^i \, S_i$$

et,

—on calcule ledit temps de propagation $\tau_t$ d'après la formule

$$\tau_t = \tau - \pi/2 \, \omega_0$$

Dans le procédé de l'invention, la pulsation $\omega_0$ du premier signal élémentaire que comprend le signal de modulation est choisie telle que

$$2 \, \pi/\omega_0 > (\tau_t)_{max}$$

ce qui permet, comme dans l'art antérieur, de lever l'ambiguité sur la distance. Toutefois, la demanderesse a eu l'idée de chercher, et a trouvé, un signal de modulation et un signal de référence qui, contenant la pulsation $\omega_0$ pour lever l'ambiguité de distance, sont néanmoins tels que, au voisinage de la valeur du retard $\tau$ qui annule la fonction d'intercorrélation, celle-ci varie très vite en fonction de $\tau$. Avec les signaux définis ci-dessus, la fonction d'intercorrélation varie de façon quasi-rectangulare puisqu'elle passe de la valeur $+1$ à la valeur $-1$ pour une variation de $\tau$ correspondant au quart de la période du dernier signal élémentaire $S_i$ que comprend le signal de modulation. Dans le procédé de l'invention, on choisit donc une pulsation $\omega_0$ assez basse pour n'avoir aucune ambiguité sur la distance maximale à mesurer, et une pulsation $\omega_i$ assez élevée pour avoir une bonne résolution, le résultat étant obtenu globalement en une seule mesure.

L'invention a également pour objet un dispositif mettant en oeuvre le procédé ci-dessus.

L'invention sera mieux comprise à l'aide de la description suivante de la mise en oeuvre préférée du procédé de l'invention dans un dispositif de détermination d'une distance à l'aide d'une onde optique, ou télémétrie optique, et de la forme de réalisation préférée de ce télémètrie optique.

La description est faite en référence aux dessins annexés, sur lesquels:

—la figure 1 schématise les signaux utilisés,
—la figure 2 décrit un télémètre optique selon l'invention,
—la figure 3 décrit le générateur de signal de modulation du télémètre de la figure 2,
—la figure 4 est un chronogramme de fonctionnement du générateur de signal de modulation de la figure 3,
—la figure 5 décrit le générateur de signal de référence du télémètrie de la figure 2.

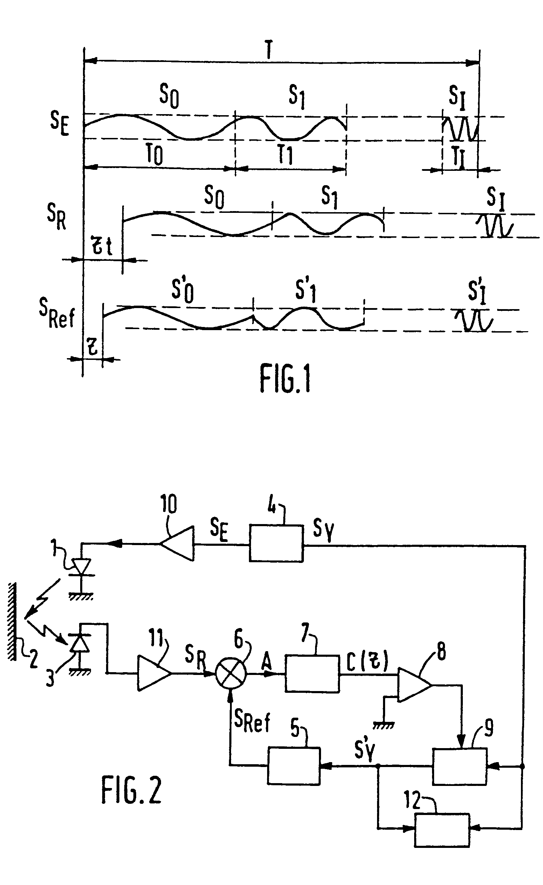

En référence à la figure 2, un télémètre optique pour mesurer la distance entre un émetteur récepteur d'un faisceau optique et un obstacle réflecteur 2 comprend:

—une diode laser 1 dont le faisceau lumineux émis se réfléchit sur l'obstacle 2 et est capté par une photodiode 3,

—un générateur 4, délivrant un signal de modulation périodique $S_E$, amplifié par un amplificateur 10 pour moduler en amplitude le faisceau lumineux émis par la diode laser 1; le premier générateur 4 délivre également un signal de synchronisation $S_y$ formé ici d'une impulsion coïncidant avec le début de chaque période du signal de modulation $S_E$,

—un amplificateur 11, en aval de la photodiode 3 pour délivrer un signal détecté $S_R$ proportionnel à l'amplitude de l'onde reçue par la photodiode 3,

—un générateur 5, délivrant un signal de référence $S_{Ref}$, synchronisé à l'aide d'un signal $S'_y$ en sortie d'un circuit retardateur 9 dont l'entrée reçoit le signal de synchronisation $S_y$; le circuit retardateur 9, qui comprend une bascule monostable, retarde le signal de synchronisation $S_y$ d'un temps $\tau$, si bien que le signal $S'_y$ est le signal de synchronisation retardé,

—un multiplieur 6, ici un modulateur en anneau, pour effectuer le produit A du signal détecté $S_R$ par le signal de référence $S_{Ref}$, suivi d'un intégrateur 7 pour délivrer un signal $C(\tau)$ qui est donc proportionnel à la fonction d'intercorrélation entre le signal détecté $S_R$ et le signal de référence $S_{Ref}$,

—un amplificateur 8, à grand gain, amplifiant le signal $C(\tau)$ pour commander la largeur de l'impulsion de sortie de la bascule monostable du circuit retardateur 9, donc pour commander la valeur du retard $\tau$,

—un circuit 12 de type connu pour mesurer $\tau$ et calculer $\tau_t$.

Le fonctionnement du télémètre de la figure 2 est le suivant. L'onde émise pour la diode 1, modulée par le signal de modulation $S_E$ se propage jusqu'à l'obstacle 2, est réfléchie et se propage jusqu'à la photodiode 1. Le temps total de propagation $\tau_t$ est représentatif de la distance L à mesurer entre l'émetteur récepteur et l'obstacle 2 par la relation

$$\tau_t = 2 \, L/C$$

où C est la vitesse de la lumière dans le milieu de propagation.

Le signal détecté $S_R$ est retardé d'un temps $\tau_t$ par rapport au signal de modulation $S_E$. De gaçon connue, le multiplieur 6, l'intégrateur 7, l'amplificateur 8, le circuit retardateur 9, et le générateur 5 forment

3

une boucle d'asservissement qui, compte tenu du grand gain de l'amplificateur 8, assure en permanence la quasi-nullité du signal C(τ), c'est-à-dire de la fonction d'intercorrélation. Le circuit 12 mesure la valeur du retard τ et calcule la valeur du temps de propagation τ$_t$ à partir de la mesure de τ et de la relation:

$$\tau_t = \tau - 2\,\pi/\omega_0$$

En référence à la figure 1, le signal de modulation S$_E$ est un signal périodique de période T, comprenant une succession de signaux élémentaires d'amplitudes égales S$_0$, S$_1$, . . . , S$_i$, . . . et S$_l$, de durée T$_0$, T$_1$, . . . , T$_i$, . . . et T$_l$ respectivement, chaque signal élémentaire S$_i$ étant périodique de pulsation ω$_i$, les pulsations ω$_1$, . . . , ω$_i$, . . . et ω$_l$ étant telles que

$$\omega_i = (2i+1)\,\omega_0$$

et les durées T$_0$, T$_1$, . . . , T$_i$, . . . et T$_l$ étant inversement proportionnelles aux pulsations ω$_0$, ω$_1$, . . . , ω$_i$, . . . et ω$_l$ respectivement.

La pulsation ω$_0$ est choisie pour que:

$$2\,\pi/\omega_0 > (\tau_t)_{max}$$

où (τ$_t$)$_{max}$ correspond à la distance maximale à mesurer.

La durée T$_l$ la plus faible est choisie pour que

$$T_l > (\tau_t)_{max}$$

Le signal de référence S$'_{Ref}$ est un signal périodique de période T, comprenant une succession de signaux élémentaires S$'_0$, S$'_1$, . . . , S$'_i$, . . . et S$'_l$, chaque signal S$'_i$ étant tel que:

$$S'_i = (-1)^i\,S_i$$

Dans ces conditions, il est possible de montrer que la fonction d'intercorrélation C(τ) entre le signal détecté S$_R$ et le signal de référence S$_{Ref}$ s'annule pour:

$$\tau - \tau_t = \pi/2\,\omega_0$$

Pour arriver, à ce résultat, dans l'expression de la fonction d'intercorrélation:

$$C(\tau) = \frac{1}{2\,T_f} \int_0^{2T_f} S_R \cdot S'_{Ref}\,dt$$

où T$_f$ représente la constante de temps du filtre de l'intégrateur 7, on remplace S$_R$ et S$'_{Ref}$ par leurs expressions en fonction des signaux élémentaires S$_0$, S$_1$, . . . , S$_i$, . . . et S$_l$ du signal de modulation S$_E$. En effet, le signal S$_R$ est identique au signal S$_E$ retardé du temps τ$_t$ et le signal S$_{Ref}$ est identique au signal S$_E$ retardé du temps τ et dont les composantes élémentaires S$_i$ de rang impair ont subi un retournement de phase. On montre alors que la fonction d'intercorrélation C(τ) est quasi-rectangulaire, c'est-à-dire que, lorsque τ$_t$ est fixé et que τ varie, la fonction d'intercorrélation C(τ) phase de la valeur +1 à la valeur −1 pour une variation de τ égale au quart de la période du dernier signal élémentaire S$_l$, période qui peut être choisie très faible. La valeur de τ qui correspond au bon fonctionnement de la boucle d'asservissement est donc déterminée avec une très bonne précision, comme la valeur du temps de propagation τ$_t$ qui est déduite de la valeur de τ.

Pour parvenir à ce résultat, la demanderesse a, d'une part, eu l'idée de chercher des signaux de modulation et de référence différents, ne présentant pas les inconvénients de l'unique signal monochromatique de l'art antérieur, et d'autre part à déterminer ces signaux en procédant en sens inverse de ce qui a été exposé ci-dessus. C'est ainsi que la demanderesse est partie d'une fonction d'intercorrélation rectangulaire, et a calculé le signal de modulation et le signal de référence correspondants. Ainsi, il a été trouvé que les signaux élémentaires sinusoïdaux, d'amplitudes égales S$_0$, S$_1$, . . . , S$_i$, . . . et S$_l$ définis ci-dessus pouvaient convenir, mais que des signaux d'amplitudes différentes A$_0$, A$_1$, . . . , A$_i$, . . . et A$_l$ respectivement pouvaient également convenir, à condition que les durées soient modifiées pour que la durée T$_i$ du signal S$_i$ soit liée à la pulsation ω$_i$ et à l'amplitude A$_i$ de de signal par la relation:

$$T_i \cdot \omega_i \cdot (A_i)^2 = \text{constante}.$$

De même, la demanderesse a montré qu'en pouvait employer, au lieu des signaux élémentaires sinusoïdaux, des signaux élémentaires rectangulaires sensiblement périodiques, de pulsation moyenne

4

égale à la pulsation instantanée précédente. Ceci permet une simplification des circuits, en permettant par exemple l'utilisation d'une porte OU exclusif comme multiplieur.

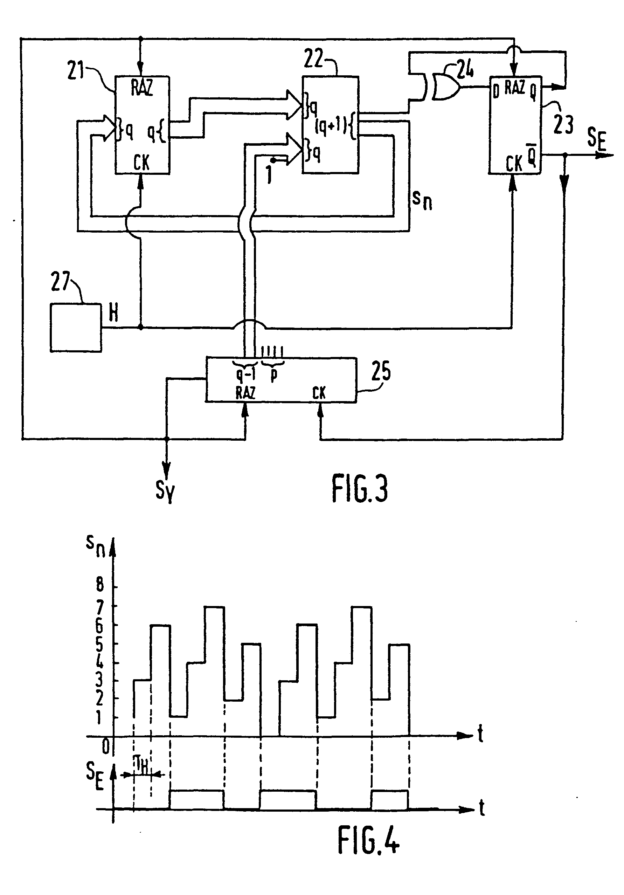

Dans le cas, le générateur 4 de signal de modulation $S_E$ comprend, en référence à la figure 3:

—un additionneur numérique 22 pourvu d'une première entrée parallèle à q bits, d'une deuxième entrée parallèle à q bits et d'une sortie à (q+1) bits, les qu bits de plus faible poids de ladite sortie de l'additionneur 22 étant appliqués à ladite première entrée de l'additionneur 22 par l'intermédiaire d'un registre 21 pourvu d'une entrée parallèle à q bits, d'une sortie parallèle à q bits, d'une entrée d'horloge et d'une entrée de remise à zéro,

—une porte OU exclusif 24 pourvue d'une première entrée recevant le bit de plus fort poids restant de ladite sortie de l'additionneur 22, d'une deuxième entrée et d'une sortie,

—une bascule 23 pourvue d'une entrée D reliée à ladite sortie de ladite porte 24, d'une entrée d'horloge, d'une entrée de remise à zéro, d'une sortie Q reliée à ladite deuxième entrée de ladite porte 24, et d'une sortie $\bar{Q}$ délivrant le signal de modulation $S_E$,

—un compteur 25 de capacité (p+q−1) bits, pourvu d'une entrée d'horloge reliée à ladite sortie $\bar{Q}$ de ladite bascule 23, d'une entrée de remise à zéro, et d'une sortie parallèle dont les (q−1) bits de plus forte poids sont reliés aux (q−1) bits de plus forts poids de ladite deuxième entrée dudit additionneur 22, dont le bit restant de plus faible poids reçoit en permanence un niveau 1, et d'une sortie de débordement reliée auxdites entrées de remise à zéro dudit registre 21, de ladite bascule 23 et dudit compteur 25, ladite sortie de débordement délivrant ledit signal de synchronisation $S_y$,

—un circuit d'horloge 27 pourvu d'une sortie, délivrant un signal H de période $T_H$, reliée auxdites entrées d'horloge dudit registre 21 et de ladite bascule 23.

Le générateur 4 fonctionne de la façon suivante. Après chaque débordement du compteur 25, ce dernier, ainsi que le registre 21 et la bascule 23, sont remis à zéro. En appelant $s_n$ le signal à l'entrée du registre 21 lors de la n$^{ième}$ impulsion de l'horloge 278 suivant une remise à zéro, on a

$$s_n = s_{n-1} + 1$$

puisque le signal $s_{n-1}$ est appliqué à la première entrée de l'additionneur 22 et que, pour l'instant, la sortie du compteur 25 étant à zéro, la deuxième entrée de l'additionneur est à 1. Le signal $s_n$ augmente donc de une unité par période d'horloge $T_H$. A chaque fois qu'il atteint la valeur (2 q−1) la bascule 23 change d'état car le bit de plus fort poids de la sortie de l'additionneur 22 passe au niveau 1 et commande, par la porte 24, le changement d'état de la bascule 23. Un changement d'état sur deux est compté par le compteur 25. Tant que la sortie du compteur 25 n'a pas atteint la valeur ($2^p+1$), la vitesse de variation de $s_n$ est inchangée. Le signal de modulation $S_E$ est donc un signal rectangulaire périodique de fréquence $f_0$ telle que:

$$1/f_0 = 2 \cdot w^q \cdot T_H$$

et de durée

$$T_0 = 2^{p+1} (1/f_0) = 2^{p+q+2} \cdot T_H$$

Au bout du temps $T_0$, le bit de rang p+1 de la sortie du compteur 25 passe à 1, et la valeur appliquée à la deuxième entrée de l'additionneur 22 passe à 3. Le signal $s_n$ suit la loi:

$$s_n = s_{n-1} + 3$$

et augmente de 3 unités par période d'horloge $T_H$.

La bascule 23 change toujours d'état lorsque le signal $s_n$ dépasse la valeur ($2^q-1$). Donc le signal de modulation $S_E$ est un signal rectangulaire sensiblement périodique (à cause du fait qu'il ne passe pas nécessairement par la valeur $2^q-1$) de fréquence moyenne $f_1$ telle que:

$$1/f_1 = 2 \cdot (2^q/3) \cdot T_H = 1/3f_0$$

et de durée

$$T_1 = 2^{p+1} (1/f_1) = 2^{p+q+2} \cdot T_H/3$$

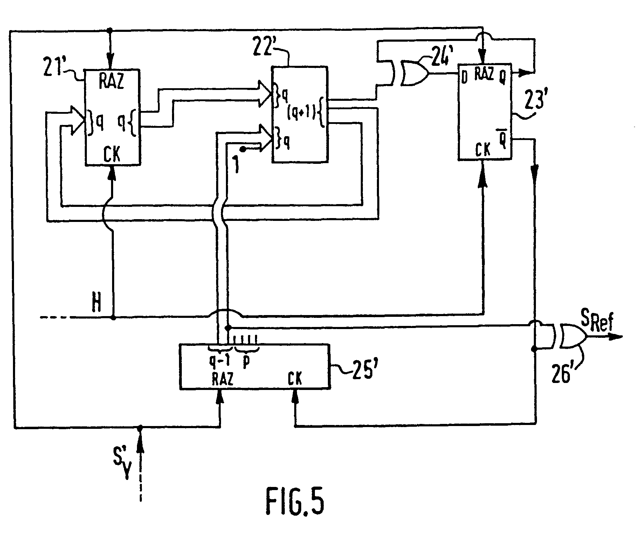

La figure 4, montre l'évolution de $s_n$ et de $S_E$ au cours du temps, dans le cas où q=3 et donc

$$2^q - 1 = 7$$

Il est facile de montrer que le signal de modulation $S_E$ va ainsi comprendre une suite de signaux élémentaires $S_0, S_1, \ldots, S_i, \ldots$ et $S_i$, la fréquence $f_i$ du signal $S_i$ étant telle que:

$$f_i = (2 i + 1) \cdot f_0$$

et la durée $T_i$ du signal étant:

$$T_i = T_0/(2\,i+1)$$

donc inversement proportionnelle à la fréquence $f_i$.

Le dernier signal $S_l$ est celui qui précède le débordement du compteur 25, correspondant à la remise à zéro générale et à l'impulsion de synchronisation du signal $S_y$, après quoi une nouvelle période T du signal de modulation $S_E$ recommence.

Le générateur 5 de signal de référence est représenté sur la figure 5. Il comprend les mêmes éléments que le générateur 4 de signal de modulation, qui ne seront donc pas décrits une deuxième fois, et le fonctionnement de ce générateur est le même qui celui du générateur 4. Toutefois ce générateur devant être synchronisé par le signal de synchronisation $S'_y$, la sortie de débordement du compteur 25 n'est plus reliée aux entrées de remise à zéro, qui reçoivent, par contre, le signal $S'_y$. Par ailleurs, pour assurer le retournement de phase des signaux élémentaires $S_i$ de rang impair, la sortie du signal $S_{Ref}$ est faite après une porte OU exclusif 26' dont une première entrée est reliée au bit de rang p+1 de la sortie du compteur 25' et dont la deuxième entrée est reliée à la sortie $\overline{Q}$ de la bascule 23'. Le signal d'horloge H du registre 21' et de la bascule 23' est celui délivré par l'horloge 27 du générateur 4.

Les autres éléments constitutifs du télémètre sont des circuits classiques bien connus de l'homme de métier.

Le procédé de l'invention s'applique à tous les dispositifs où il est nécessaire de moduler une onde et de mesurer des temps de déphasage, tel que par exemple les altimètres.

Le procédé de l'invention peut être utilisé indifféremment avec tous types d'ondes et trouver des applications dans les domaines de la radio, de l'acoustique et de l'optique.

## Revendications

1. Procédé de mesure du temps de propagation $\tau_t$ d'une onde entre un émetteur-récepteur de ladite onde, et un obstacle réflecteur, dans lequel:
— on émet ladite onde modulée en amplitude à l'aide d'un signal de modulation ($S_E$) périodique,
— on détecte l'amplitude de ladite onde après propagation, réflexion et réception, pour obtenir un signal détecté ($S_R$),
— on engendre un signal de référence ($S_{Ref}$) périodique de même période que ledit signal de modulation ($S_E$) et déphasé par rapport à lui d'un déphasage correspondant à un temps de retard $\tau$,
— on calcule la fonction d'intercorrélation ($C(\tau)$) entre ledit signal détecté ($S_R$) et ledit signal de référence ($S_{Ref}$),
— on commande ledit déphasage pour que ladite fonction d'intercorrélation ($C(\tau)$) soit nulle, et,
— on calcule ledit temps de propagation $\tau_t$ à partir du temps de retard $\tau$ ainsi obtenu,
procédé caractérisé par le fait que:
— chaque période dudit signal de modulation ($S_E$) comprend une succession de signaux élémentaires d'amplitudes égales $S_0, S_1, \ldots, S_i, \ldots$ et $S_l$ de durées $T_0, T_1, \ldots, T_i, \ldots$ et $T_l$ respectivement, chaque signal élémentaires $S_i$ étant sensiblement périodique de pulsation moyenne $\omega_i$, les pulsations $\omega_1, \ldots, \omega_i, \ldots$ et $\omega_l$ étant telles que:

$$\omega_i = (2\,i+1)\,\omega_0$$

et les durées $T_0, T_1, \ldots, T_i, \ldots$ et $T_l$ étant inversement proportionnelles aux pulsations $\omega_0, \omega_1, \ldots, \omega_i$, et $\omega_l$ respectivement,
— chaque période dudit signal de référence ($S_{Ref}$) comprend une succession de signaux élémentaires $S'_0, S'_1, \ldots, S'_i, \ldots$ et $S'_l$, chaque signal $S'_i$ étant tel que:

$$S'_i = (-1)^i\,S_i$$

et,
— on calcule ledit temps de propagation $\tau_t$ d'après la formule

$$\tau_t = \tau - \pi/s\,\omega_0$$

2. Dispositif pour mesurer le temps de propagation $\tau_t$ d'une onde entre un émetteur-récepteur de cette onde et un obstacle réflecteur (2) comprenant:
— des premiers moyens (4) pour engendrer un signal de modulation ($S_E$) périodique,
— des moyens (1, 10), recevant ledit signal de modulation ($S_E$) pour émettre ladite onde modulée en amplitude,
— des moyens (3, 11), recevant ladite onde après propagation et réflexion, pour détecter son amplitude et délivrer un signal détecté ($S_R$),
— des deuxièmes moyens (9, 5), pour engendrer un signal de référence ($S_{Ref}$) périodique de même période que ledit signal de modulation ($S_E$) et déphasé par rapport à lui d'un déphasage correspondant à un temps de retard $\tau$,

# EP 0 204 613 B1

—des moyens (6, 7) pour calculer la fonction d'intercorrélation (C(τ)) entre ledit signal détecté (S$_R$) et ledit signal de référence (S$_{Ref}$),

—des moyens (8) pour asservir ledit déphasage afin que ladite fonction d'intercorrélation (C(τ)) soit nulle, et,

—des moyens (12) pour calculer ledit temps de propagation τ$_t$ à partir du temps de retard τ ainsi obtenu,

dispositif caractérisé par le fait que:

—lesdits premiers moyens (4) générateurs (S$_E$) sont agencés pour que chaque période dudit signal de modulation (S$_E$) comprenne une succession de signaux élémentaires d'amplitudes égales S$_0$, S$_1$, . . . , S$_i$, . . . et S$_l$ de durées T$_0$, T$_1$, . . . , T$_i$, . . . et T$_l$ respectivement, chaque signal élémentaire S$_i$ étant sensiblement périodique de pulsation moyenne ω$_i$, les pulsations ω$_1$, . . . , ω$_i$, . . . et ω$_l$ étant telles que:

$$\omega_i = (2\,i+1)\,\omega_0$$

et les durées T$_0$, T$_1$, . . . , T$_i$, . . . et T$_l$ étant inversement proportionnelles aux pulsations ω$_0$, ω$_1$, . . . , ω$_i$, . . . et ω$_l$ respectivement, lesdits premiers moyens (4) générateurs délivrant de plus in signal de synchronisation (S$_y$) au début de chaque période dudit signal de modulation (S$_E$),

—lesdits deuxièmes moyens (9, 5) générateurs comprennent des moyens (9), recevant ledit signal de synchronisation (S$_y$), pour le retarder dudit temps de retard (τ) et des troisièmes moyens (5), synchronisés par le signal de synchronisation retardé (S'$_y$), pour engendrer une succession de signaux élémentaires S'$_0$, S'$_1$, . . . , S'$_i$, . . . et S'$_l$ chaque signal S'$_i$ étant tel que:

$$S'_i = (-1)^i\,S_i$$

—lesdits moyens (12) de calcul sont agencés pour calculer le temps de propagation τ$_t$ d'après la formule:

$$\tau_t = \tau - \pi/2\,\omega_0$$

3. Dispositif selon la revendication 2, dans lequel lesdits premiers moyens (4) générateurs comprennent:

—un additionneur numérique (22) pourvu d'une première entrée parallèle à q bits, d'une deuxième entrée parallèle à q bits et d'une sortie à (q+1) bits, les q bits de plus faible poids de ladite sortie de l'additionneur (22) étant appliqués à ladite première entrée de l'additionneur (22) par l'intermédiaire d'un registre (21) pourvu d'une entrée parallèle à q bits, d'une sortie parallèle à q bits, d'une entrée d'horloge et d'une entrée de remise à zéro,

—une porte OU exclusif (24) pourvue d'une première entrée recevant le bit de plus fort poids restant de ladite sortie de l'additionneur (22), d'une deuxième entrée et d'une sortie,

—une bascule (23) pourvue d'une entrée D reliée à ladite sortie de ladite porte (24), d'une entrée d'horloge, d'une entrée de remise à zéro, d'une sortie Q reliée à ladite deuxième entrée de ladite porte (24), et d'une sortie Q̄ délivrant ledit signal de modulation (S$_E$),

—un compteur (25) de capacité (p+q−1) bits, pourvu d'une entrée d'horloge reliée à ladite sortie Q̄ de ladite bascule (23), d'une entrée de remise à zéro, et d'une sortie parallèle dont les (q−1) bits de plus forts poids sont reliés aux (q−1) bits de plus forts poids de ladite deuxième entrée dudit additionneur (22), dont le bit restant de plus faible poids reçoit en permanence un niveau 1, et d'une sortie de débordement reliée auxdites entrées de remise à zéro dudit registre (21), de ladite bascule (23) et dudit compteur (25), ladite sortie de débordement délivrant ledit signal de synchronisation (S$_y$),

—un circuit d'horloge (27) pourvu d'une sortie reliée auxdites entrées d'horloge dudit registre (21) et de ladite bascule (23).

4. Dispositif selon l'une des revendications 2 ou 3, dans lequel lesdits troisièmes moyens (5) comprennent:

—un additionneur numérique (22') pourvu d'une première entrée parallèle à q bits, d'une deuxième entrée parallèle à q bits et d'une sortie à (q+1) bits, les q bits de plus faible poids de ladite sortie de l'additionneur (22') étant appliqués à ladite première entrée de l'additionneur (22') par l'intermédiaire d'un registre (21') pourvu d'une entrée parallèle à q bits, d'une sortie parallèle à q bits, d'une entrée d'horloge et d'une entrée de remise à zéro,

—une porte OU exclusif (24') pourvue d'une première entrée recevant le bit de plus fort poids restant de ladite sortie de l'additionneur (22'), d'une deuxième entrée et d'une sortie,

—une bascule (23') pourvue d'une entrée D reliée à ladite sortie de ladite porte (24'), d'une entrée d'horloge, d'une entrée de remise à zéro, d'une sortie Q reliée à ladite deuxième entrée de ladite porte (24'), et d'une sortie Q̄,

—un compteur (25') de capacité (p+q−1) bits, pourvu d'une entrée d'horloge reliée à ladite sortie Q̄ de ladite bascule (23'), d'une sortie parallèle dont les (q−1) bits de plus forts poids sont reliés aux (q−1) bits de plus forts poids de ladite deuxième entrée dudit additionneur (22), dont le bit restant de plus faible poids reçoit en permanence un niveau 1, et d'une entrée de remise à zéro reliée auxdites entrées de remise à zéro dudit registre (21') et de ladite bascule (23') et recevant ledit signal de synchronisation retardé (S'$_y$),

7

—lesdites entrées d'horloge dudit registre (21') et de ladite bascule (23') étant reliées à la sortie dudit circuit d'horloge (27), et

—une porte OU exclusif (26') pourvue d'une première entrée reliée au bit de rang (p+1) de la sortie dudit compteur (25'), d'une deuxième entrée reliée à la sortie $\overline{Q}$ de ladite bascule (23') et d'une sortie délivrant ledit signal de référence ($S_{Ref}$).

**Patentansprüche**

1. Verfahren zur Messung der Laufzeit $\tau_t$ einer Welle zwischen einem Sende-Empfangsgerät der genannten Welle und einem reflektierenden Hindernis, in welchem:

—die genannte Welle amplitudenmoduliert mittels eines periodischen Modulationssignals ($S_E$) gesendet wird,

—die Amplitude der genannte Welle nach Ausbreitung, Reflexion und Empfang erfaßt wird, um ein erfaßtes Signal ($S_R$) zu erzielen,

—ein periodisches Referenzsignal ($S_{Ref}$) derselben Periode wie das genannte Modulationssignal ($S_E$) und gegenüber diesem phasenverschoben um eine der Verzögerungszeit $\tau$ entsprechende Phasenverschiebung erzeugt wird,

—die Interkorrelationsfunktion ($C(\tau)$) zwischen dem genannten erfaßten Signal ($S_R$) und dem genannten Referenzsignal ($S_{Ref}$) errechnet wird,

—die genannte Phasenverschiebung gesteuert wird, damit die genannte Interkorrelationsfunktion ($C(\tau)$) Null ist, und

—die genannte Laufzeit $\tau_t$ ausgehend von der so erzielten Verzögerungszeit $\tau$ errechnet wird,

Verfahren, dadurch gekennzeichnet, daß:

—jede Periode des genannten Modulationssignals ($S_E$) eine Folge von Elementarsignalen $S_0, S_1, \ldots, S_i, \ldots$ und $S_l$ mit gleichen Amplituden und einer Dauer von respektive $T_0, T_1, \ldots, T_i, \ldots$ und $T_l$ umfaßt, wobei jedes Elementarsignal $S_i$ deutlich periodisch, mit einer durchschnittlichen Kreisfrequenz $\omega_i$ ist, und die Kreisfrequenzen $\omega_1, \ldots, \omega_i, \ldots$ und $\omega_l$ so sind, daß:

$$\omega_i = (2\ i+1)\ \omega_0$$

und die Dauer $T_0, T_1, \ldots, T_i, \ldots$ und $T_l$ umgekehrt proportional zu den jeweiligen Kreisfrequenzen $\omega_0, \omega_1, \ldots, \omega_i,$ und $\omega_l$ ist,

—jede Periode des genannten Referenzsignals ($S_{Ref}$) eine Folge von Elementarsignalen $S'_0, S'_1, \ldots, S'_i, \ldots$ und $S'_l$ umfaßt, wobei jedes Signal $S'_i$ so ist, daß:

$$S'_i = (-1)^i\ S_i$$

und

—die genannte Laufzeit $\tau_t$ gemäß der Formel

$$\tau_t = \tau - \pi/2\ \omega_0$$

errechnet wird.

2. Vorrichtung für die Messung der Laufzeit $\tau_t$ einer Welle zwischen einem Sende-Empfangsgerät dieser Welle und einem reflektierenden Hindernis (2), umfassend:

—erste Mittel (4) zur Erzeugung eines periodischen Modulationssignals ($S_E$),

—Mittel (1, 10) für den Empfang des genannten Modulationssignals ($S_E$), um die genannte amplitudenmodulierte Welle zu senden,

—Mittel (3, 11) für den Empfang der genannten Welle nach Ausbreitung und Reflexion, um ihre Amplitude zu erfassen und ein erfaßtes Signal ($S_R$) abzugeben,

—zweite Mittel (9, 5) zur Erzeugung eines periodischen Referenzsignals ($S_{Ref}$) derselben Periode wie das genannte Modulationssignal ($S_E$) und gegenüber diesem phasenverschoben um eine der Verzögerungszeit $\tau$ entsprechende Phasenverschiebung,

—Mittel (6, 7) zur Errechnung der Interkorrelationsfunktion ($C(\tau)$) zwischen dem genannten erfaßten Signal ($S_R$) und dem genannten Referenzsignal ($S_{Ref}$) zu errechnen,

—Mittel (8) zur Regelung der genannten Phasenverschiebung, damit die genannte Interkorrelationsfunktion ($C(\tau)$) gleich Null ist, und

—Mittel (12) zur Errechnung der genannten Laufzeit $\tau_t$ ausgehend von der so erhaltenen Verzögerungszeit $\tau$,

Vorrichtung, dadurch gekennzeichnet, daß:

—die genannten erste Sendemittel (4) so gestaltet sind, daß jede Periode des genannten Modulationssignals ($S_E$) eine Folge von Elementarsignalen $S_0, S_1, \ldots, S_i, \ldots$ und $S_l$ mit gleichen Amplituden und einer Dauer von respektive $T_0, T_1, \ldots, T_i, \ldots$ und $T_l$ umfaßt, wobei jedes Elementarsignal

$S_i$ deutlich periodisch mit durchschnittlicher Kreisfrequenz $\omega_i$ ist, wobei die Kreisfrequenzen $\omega_1, \ldots, \omega_i, \ldots$ und $\omega_l$ so sind, daß:

$$\omega_i = (2\,i+1)\,\omega_0$$

und die Dauer $T_0, T_1, \ldots, T_i \ldots$ und $T_l$ umgekehrt proportional zu den jeweiligen Kreisfrequenzen $\omega_0$, $\omega_1, \ldots, \omega_i, \ldots$ und $\omega_l$ ist, wobei die genannten ersten Sendemittel (4) außerdem zu Beginn jeder Periode des genannten Modulationssignals ($S_E$) zusätzlich ein Synchronisierungssignal ($S_y$) abgeben,

—die genannten zweiten Sendemittel (9, 5) Mittel (9) umfassen, welche das genannte Synchronisierungssignal ($S_y$) empfangen, um es um die genannte Verzögerungszeit ($\tau$) zu verzögern, sowie durch das verzögerte Synchronisierungssignal ($S'_y$) synchronisierte dritte Mittel (5), um eine Folge von Elementarsignalen $S'_0, S'_1, \ldots, S'_i, \ldots$ und $S'_l$ zu erzeugen, wobei jedes $S'_i$ Signal so ist, daß:

$$S'_i = (-1)^i\,S_i$$

—die genannten Berechnungsmittel (12) so gestaltet sind, daß man damit die Laufzeit $\tau_t$ gemäß der nachstehenden Formel berechnen kann:

$$\tau_t = \tau - \pi/2\,\omega_0$$

3. Vorrichtung gemäß Anspruch 2, bei welcher die genannten ersten Sendemittel (4) Folgendes umfassen:

—einen numerischen Addierer (22), ausgestattet mit einem ersten parallelen Eingang mit q Bits, einem zweiten parallelen Eingang mit q Bits und einem Ausgang mit (q+1) Bits, wobei die q Bits mit der geringsten Wertigkeit des genannten Ausgangs des Addierers (22) dem genannten ersten Eingang des Addierers (22) unter Zwischenschaltung eines Registers (21), versehen mit einem parallelen Eingang mit q Bits, einem parallelen Ausgang mit q Bits, einem Takteingang und einem Nullstellungs-Eingang, zugeführt werden,

—ein Exklusiv-ODER-Gatter (24), versehen mit einem ersten Eingang, der das verbleibende Bit mit der höchsten Wertigkeit des genannten Ausgangs des Addierers (22) empfängt, einem zweiten Eingang und einem Ausgang,

—eine Kippschaltung (23) versehen mit einem Eingang D, der verbunden ist mit dem genannten Gatter (24), mit einem Takteingang, einem Nullstellungs-Eingang, einem mit dem genannten zweiten Eingang des genannten Gatters (24) verbundenen Ausgang Q, und einem Ausgang $\bar{Q}$, der das genannte Modulationssignal ($S_E$) abgibt.

—einen Zähler (25) mit einer Kapazität von (p+q−1) Bits, versehen mit einem mit dem genannten Ausgang $\bar{Q}$ der genannten Kippschaltung (23) verbundenen Takteingang, einem Nullstellungs-Eingang und einem parallelen Ausgang, dessen (q−1) Bits mit der höchsten Wertigkeit mit den (q−1) Bits mit der höchsten Wertigkeit des genannten zweiten Eingangs des genannten Addierers (22) verbunden sind, dessen verbleibendes Bit mit der geringsten Wertigkeit ständig einen Pegel 1 empfängt, und einem Überlaufausgang, verbunden mit den genannten Nullstellungs-Eingängen des genannten Registers (21), der genannten Kippschaltung (23) und des genannten Zählers (25), wobei der genannte Überlaufausgang des genannte Synchronisierungssignal ($S_y$) aussendet,

—einem Taktgeber-Schaltkreis (27), versehen mit einem Ausgang, der verbunden ist mit den genannten Takt-Eingängen des genannten Registers (21) und der genannten Kippschaltung (23).

4. Vorrichtung gemäß einem der Ansprüche 2 oder 3, in welchem die genannten dritten Mittel (5) umfassen:

—einen numerischen Addierer (22'), versehen mit einem ersten parallelen Eingang mit q Bits, einem zweiten parallelen Eingang mit q Bits und einem Ausgang mit (q+1) Bits, wobei die q Bits mit der geringsten Wertigkeit des genannten Ausgangs des Addierers (22') dem genannten ersten Eingang des Addierers (22') unter Zwischenschaltung eines mit einem parallelen Eingang mit q Bits, einem parallelen Ausgang mit q Bits, einem Takteingang und einem Nullstellungs-Eingang versehenen Registers (21') zugeführt werden,

—ein Exklusive-ODER-Gatter (24') versehen mit einem ersten Eingang, der das verbleibende Bit mit der höchsten Wertigkeit des genannten Addierer-Ausgangs (22') empfängt, mit einem zweiten Eingang und einem Ausgang,

—eine Kippschaltung (23'), versehen mit einem mit dem genannten Ausgang des genannten Gatters (24') verbundenen Eingang D, einem Takteingang, einem Nullstellungs-Eingang, einem mit dem zweiten Eingang des genannten Gatters (24') verbundenen Ausgang Q und einem Ausgang $\bar{Q}$,

—einen Zähler (25') mit einer Kapazität von (p+q−1) Bits, versehen mit einem mit dem genannten Ausgang $\bar{Q}$ der genannten Kippschaltung (23') verbundenen Takteingang, einem parallelen Ausgang, dessen (q−1) Bits mit der höchsten Wertigkeit mit den (q−1) Bits mit der höchsten Wertigkeit des genannten zweiten Eingangs des genannten Addierers (22') verbunden sind, dessen verbleibendes Bit mit der geringsten Wertigkeit ständig den Pegel 1 empfängt, und einem Nullstellungs-Eingang, verbunden mit dem genannten Nullstellungs-Eingängen des genannten Registers (21') und der genannten Kippschaltung

9

(23'), welcher das genannte verzögerte Synchronisierungssignal (S'$_y$) empfängt,

—wobei die genannten Takt-Eingänge des genannten Registers (21') und der genannten Kippschaltung (23') verbunden sind mit dem Ausgang des genannten Taktgeber-Schaltkreises (27), und

—ein Exklusive-ODER-Gatter (26'), versehen mit einem ersten Eingang, verbunden mit dem Bit des Ranges (p+1) des Ausgangs des genannten Zählers (25'), einem zweiten mit dem Ausgang $\bar{Q}$ der genannten Kippschaltung (23') verbundenen Eingang, und einem Ausgang, der das genannte Referenzsignal (S$_{Ref}$) aussendet.

**Claims**

1. Method of measuring the propagation time $\tau_t$ of a wave between a transmitter-receiver of said wave and a reflecting obstacle, in which:

—said wave is transmitted modulated in amplitude by means of a periodic modulation signal (S$_E$),

—the amplitude of said wave is detected after propagation, reflection and reception, so as to obtain a detected signal (S$_R$),

—a periodic reference signal (S'$_{Ref}$) is generated of the same period as said modulation signal (S$_E$) and is phase shifted with respect thereto by a phase shift corresponding to a delay time $\tau$,

—the intercorrelation function (C($\tau$)) is calculated between said detected signal (S$_R$) and said reference signal (S'$_{Ref}$),

—said phase shift is controlled so that said intercorrelation function (C($\tau$)) is zero, and

—said propagation time $\tau_t$ is calculated from the delay time $\tau$ thus obtained,

—each period of said modulation signal (S$_E$) comprises a succession of elementary signals of equal amplitudes S$_0$, S$_1$, . . . , S$_i$, . . . and S$_l$ of times T$_0$, T$_1$, . . . , T$_i$, . . . and T$_l$ respectively, each elementary signal S$_i$ being substantially periodic of mean pulsation $\omega_i$, the pulsations $\omega_1$, . . . , $\omega_i$, . . . and $\omega_l$ being such that:

$$\omega_i = (2\,i+1)\,\omega_0$$

and the times T$_0$, T$_1$, . . . T$_i$, . . . and T$_l$ being inversely proportional to the pulsations $\omega_0$, $\omega_1$, . . . $\omega_i$, and $\omega_l$ respectively,

—each period of said reference signal (S'$_{Ref}$) comprises a succession of elementary signal S'$_0$, S'$_1$, . . . , S'$_i$, . . . and S'$_l$, each signal S'$_i$ being such that:

$$S'_i = (-1)^i\,S_i$$

and,

—said propagation time $\tau_t$ is calculated from the formula

$$\tau_t = \tau - \pi/2\,\omega_0$$

2. Device for measuring the propagation time $\tau_t$ of a wave between a transmitter-receiver of this wave and a reflecting obstacle (2) comprising:

—first means (4) for generating a periodic modulation signal (S$_E$),

—means (1, 10) receiving said modulation signal (S$_E$) for emitting said amplitude modulated wave,

—means (3, 11) receiving said wave after propagation and reflection for detecting its amplitude and delivering a detected signal (S$_R$),

—second means (9, 5) for generating a periodic reference signal (S'$_{Ref}$) at the same period as said modulation signal (S$_E$), and phase shifted with respect thereto by a phase shift correspnding to a delay time $\tau$,

—means (6, 7) for calculating the intercorrelation function (C($\tau$)) between said detected signal (S$_R$) and said reference signal (S'$_{Ref}$),

—means (8) for controlling said phase shift so that said intercorrelation function (C($\tau$)) is zero, and

—means (12) for calculating said propagation time $\tau_t$ from the delay time $\tau$ thus obtained, in which device:

—said first generator means (4) are arranged so that each period of said modulation (S$_E$) signal comprises a succession of elementary signals of equal amplitudes S$_0$, S$_1$, . . . , S$_i$, . . . and S$_l$ of times T$_0$, T$_1$, . . . , T$_i$, . . . and T$_l$ respectively, each elementary signal S$_i$ being substantially periodic of mean pulsation $\omega_i$, the pulsations $\omega_1$, . . . , $\omega_i$, . . . and $\omega_l$ being such that:

$$\omega_i = (2\,i+1)\,\omega_0$$

and the times T$_0$, T$_1$, . . . T$_i$, . . . and T$_l$ being inversely proportional to the pulsations $\omega_0$, $\omega_1$ . . . , $\omega_i$, . . . and $\omega_l$ respectively, said first generator means (4) delivering in addition a synchronization signal (S$_y$) at the beginning of each period of said modulation signal (S$_E$),

—said second generator means (9, 5) comprise means (9), receiving said synchronization signal (S$_y$), for delaying it by said delay time ($\tau$) and third means (5), synchronized by the delayed synchronization signal (S'$_y$), for generating a succession of elementary signals S'$_0$, S'$_1$, ..., S'$_i$, ... and S'$_l$, each signal S'$_i$ being such that:

$$S'_i=(-1)^i S_i$$

—said calculating means (12) are adapted for calculating the propagation time $\tau_t$ from the formula:

$$\tau_t=\tau-\pi/2\,\omega_0$$

3. Device as claimed in claim 2, wherein said frist generator means (4) comprise:
—a digital adder (22) having a first parallel q bits input, a second parallel q bits input and a (q+1) bits output, the q least significant bits of said output of the adder (22) being applied to said first input of the adder (22) through a register (21) having a parallel q bits input, a parallel q bit output, a clock input and a reset input,
—an exclusive OR gate (24) having a first input receiving the remaining most significant bit of said output of the adder (22), a second input and an output,
—a flip flop (23) having a D input connected to said output of said gate (24), a clock input, a reset input, a Q output connected to said second input of said gate (24) and a $\overline{Q}$ output delivering said modulation signal (S$_E$),
—a counter (25) having a capacity of (p+q−1) bits, having a clock input connected to said $\overline{Q}$ output of said flip flop (23), a reset input and a parallel output whose (q−1) most significant bits are connected to the (q−1) most significant bits of said second input of said adder, whose remaining least significant bits permanently receives a level 1, and an overflow output connected to said reset input of said register (21), of said flip flop (23) and of said counter (25), said overflow output delivering said synchronization signal (S$_y$),
—a clock circuit (27) having an output connected to said clock inputs of said register (21) and of said flip flop (23).
4. The device as claimed in one of claims 2 or 3, wherein said third means (5) comprise:
—a digital adder (22') having a first parallel q bits input, a second parallel q bits input and a (q+1) bits output, the q least significant bits of said output of the adder (22') being applied to said first input of the adder (22') through a register (21') having a parallel q bits input a parallel q bits output, a clock input and a reset input,
—an exclusive OR gate (24') having a first input receiving the remaining most significant bit of said output of the adder (22'), a second input and an output,
—a flip flop (23') having a D input, connected to said output of said gate (24'), a clock input, a reset input, a Q output connected to said second input of said gate (24'), and a $\overline{Q}$ output,
—a counter (25') having a capacity of (p+q−1) bits, with a clock input connected to said $\overline{Q}$ output of said flip flop (23'), a parallel output whose (q−1) most significant bits are connected to the (q−1) most significant bits of said second input of said adder (22'), whose remaining least significant bit permanently receives a level 1, and a reset input connected to said reset inputs of said register (21') and of said flip flop (23') and receiving said delayed synchronization signal (S'$_y$),
—said clock inputs of said register (21') and of said flip flop (23') being connected to the output of said clock circuit (27), and
—an exclusive OR gate (26') having a first input connected to the bit of rank (p+1) of the output of said counter (25'), a second input connected to the $\overline{Q}$ output of said flip flop (23') and an output delivering said reference signal (S$_{Ref}$).

FIG.1

FIG.2

FIG.3

FIG.4

FIG.5